# EUROPÄISCHE PATENTSCHRIFT

(11) **EP 2 818 289 B1**
(45) Veröffentlichungstag und Bekanntmachung des Hinweises auf die Patenterteilung: **11.09.2024**
(21) Anmeldenummer: 14173366.7
(22) Anmeldetag: 21.06.2014
(51) Int. Cl.: B28D 1/14, B24B 19/04, B23C 3/32

(54) **Gesteinbohrerschaft und Verfahren zu dessen Herstellung**
Rock drill shaft and method of production thereof
Tige de foret à pierre et son procédé de fabrication

(30) Priorität: 25.06.2013 DE 102013106614
(43) Veröffentlichungstag der Anmeldung: 31.12.2014
(73) Patentinhaber: Heller Tools GmbH, 49413 Dinklage (DE)
(72) Erfinder: Lampe, Rainer, 49413 Dinklage (DE); Thiel, Torsten, 49632 Bevern (DE)
(74) Vertreter: Gottschald, Jan

(56) Entgegenhaltungen:
- DE-A1- 10 011 108
- DE-A1- 102010 019 379
- DE-A1- 3 609 911
- DE-A1- 4 307 553
- DE-U1- 20 108 179

## Beschreibung

Die Erfindung betrifft einen Gesteinsbohrerschaft für einen Gesteinsbohrer, insbesondere für den Einsatz in Verbindung mit einer Hammerbohrvorrichtung, gemäß Anspruch 1, einen Gesteinsbohrer mit einem solchen Gesteinsbohrerschaft gemäß Anspruch 12 und ein Verfahren zur Herstellung eines Gesteinsbohrerschafts gemäß Anspruch 13.

Der in Rede stehende Gesteinsbohrer eignet sich für das Bohren in Beton oder Stahlbeton, aber auch in sonstigem Mauerwerk, Fels o. dgl.. Er ist mit einem Gesteinsbohrerschaft ausgestattet, in dem ein Schneideinsatz eingesetzt ist.

Üblicherweise weist der Gesteinsbohrerschaft am oberen Ende einen Bohrerkopf, am unteren Ende einen Einsteckabschnitt und dazwischen eine Wendel auf. Der Bohrerkopf ist mit einer stirnseitigen Aufnahmenut für die Aufnahme des Schneideinsatzes ausgestattet, wobei die Aufnahmenut durch mindestens zwei Seitenteile des Bohrerkopfes definiert wird.

Aus der DE 100 11 108 A1 ist ein Gesteinsbohrer für Hammerbohrmaschinen bekannt geworden, bei dem eine Förderwendel mit Haupt- und Nebenstegen verwendet wird. Die Förderwendel wird dabei unter Zunahme des Kernquerschnitts bzw. Abnahme der Nutentiefe bis zum bzw. in den vorderen Bereich des Bohrerkopfes geführt.

Der bekannte Gesteinsbohrerschaft (DE 10 2011 016 686 A1 ), von dem die Erfindung ausgeht, zeigt eine besondere Konstruktion der Wendel, die neben einem guten Bohrmehltransport auch eine hohe Robustheit gegen die Entstehung von Schwingungen gewährleistet. Die Wendel ist hier zweigängig ausgestaltet und weist entsprechend zwei Abfuhrnuten auf.

Theoretisch wäre es möglich, den Bohrmehltransport bei dem bekannten Gesteinsbohrerschaft durch eine weitere Vertiefung der Abfuhrnuten weiter zu verbessern. Allerdings würde diese Maßnahme regelmäßig dazu führen, dass die Abfuhrnuten in die Seitenteile des Bohrerkopfes hineinlaufen, was die Stabilität der Seitenteile beeinträchtigen würde.

Der obige Effekt entsteht dadurch, dass die Abfuhrnuten des bekannten Gesteinsbohrerschafts in einem Zerspanprozess mittels Schleif- oder Frässcheiben erzeugt worden sind, die gegenüber der Bohrerlängsachse jeweils um einen Anstellwinkel angestellt sind. Die jeweilige Schleif- oder Frässcheibe dringt entlang einer Eindringbahn, die im wesentlichen der Umfangsgeometrie der Schleif- oder Frässcheibe entspricht, in den zu bearbeitenden Bohrerrohling ein. Ein solcher Bohrerrohling ist zumindest im Bereich der herzustellenden Wendel üblicherweise zylindrisch ausgestaltet.

Die Schleif- oder Frässcheibe läuft nun durch eine geeignete Kombination von Längsvorschub der Schleifscheibe und Winkelvorschub des Bohrerrohlings auf einer spiralförmigen Bahn, die der jeweiligen, herzustellenden Abfuhrnut entspricht. Aufgrund des kreisförmigen Umfangs der Schleif- oder Frässcheibe läuft der eigentlichen Zerspanstelle, an der das jeweils gewünschte Sollmaß erzeugt wird, ein Zerspanbereich voraus und/oder nach, der von der Geometrie der Schleif- oder Frässcheibe abhängt und der im Folgenden als "Zerspanauslauf" bezeichnet wird.

Für den Fall, dass die Wendel von unten nach oben, also zum Bohrerkopf hin, geschliffen oder gefräst wird, ergibt sich ein bohrkopfseitiger, vorlaufender Zerspanauslauf, der bei ungünstiger Dimensionierung eine ungewünschte Schwächung der Seitenteile des Bohrerkopfes mit sich bringen kann. Durch die Symmetrie der Schleif- oder Frässcheibe ergibt sich derselbe Effekte für den Fall, dass die Wendel von oben nach unten, also zum Einsteckabschnitt hin, geschliffen oder gefräst wird.

Der obige, bohrerkopfseitige Zerspanauslauf macht insbesondere bei der oben angesprochenen Vertiefung der Abfuhrnuten Probleme. Je tiefer die Eindringtiefe der Schleif- oder Frässcheibe ist, desto weiter läuft nämlich der Zerspanauslauf der Zerspanstelle voraus. Dies ist regelmässig mit der angesprochenen Schwächung der Seitenteile des Bohrerkopfes verbunden.

Der Erfindung liegt das Problem zugrunde, den bekannten Gesteinsbohrerschaft derart auszugestalten und weiterzubilden, dass der Bohrmehltransport verbessert wird, ohne die mechanische Robustheit des Bohrerkopfes zu beeinträchtigen.

Das obige Problem wird bei einem Gesteinsbohrerschaft gemäß dem Oberbegriff von Anspruch 1 durch die Merkmale des kennzeichnenden Teils von Anspruch 1 gelöst.

Wesentlich ist zunächst einmal die Überlegung, den Bohrmehltransport durch eine Vertiefung der Abfuhrnuten der Wendel zu verbessern.

Wesentlich ist weiter die Erkenntnis, dass es für die Verbesserung des Bohrmehltransports weniger auf eine Vertiefung der Abfuhrnuten am Bohrerkopf, sondern vielmehr auf eine Vertiefung der Abfuhrnuten in den weiter unten gelegenen Bereichen der Wendel ankommt. Es hat sich nämlich gezeigt, dass im Bereich des Bohrerkopfes aufgrund der dort herrschenden, chaotischen Zustände genügend Bewegung im Bohrmehl vorhanden ist, um eine im Ergebnis effektive Abfuhr von Bohrmehl zu erzielen.

Wesentlich ist schließlich die Erkenntnis, dass die axiale Lage des bohrkopfseitigen Zerspanauslaufs soweit wie möglich der axialen Lage des Nutgrundes der Aufnahmenut angenähert werden sollte. Damit wird erreicht, dass die Abfuhmuten soweit wie möglich an die Aufnahmenut heranreichen, ohne die Seitenteile des Bohrerkopfes zu schwächen. Gleichzeitig wird erreicht, dass die Seitenteile des Bohrerkopfes durch den vergleichsweise großen Kerndurchmesser des ersten Wendelabschnitts breit und damit mechanisch robust ausgelegt werden können. Im Einzelnen wird vorgeschlagen, dass zumindest zwei Wendelabschnitte vorgesehen sind, deren mittlere Kerndurchmesser sich unterscheiden. Dabei weist der erste Wendelabschnitt, der sich an den Bohrerkopf anschließt, einen größeren mittleren Kerndurchmesser auf, als ein zweiter Wendelabschnitt, der weiter zum Einsteckende hin angeordnet ist.

Vorschlagsgemäß werden die Abfuhrnuten in einem Zerspanprozess mittels mindestens einer Schleif- oder Frässcheibe erzeugt, die in an sich üblicher Weise gegenüber der Bohrerlängsachse um einen Anstellwinkel angestellt ist bzw. sind. Wesentlich dabei ist die Tatsache, dass sich die axiale Lage des bohrkopfseitigen Zerspanauslaufs des auf die Erzeugung der Abfuhrnuten gerichteten Zerspanprozesses innerhalb eines vorbestimmten Toleranzfensters um die axiale Lage des Nutgrundes von weniger als 10% des Bohrerdurchmessers nach oben hin und von weniger als 20 % nach unten hin befindet.

Mit dem vorschlagsgemäßem Gesteinsbohrerschaft lässt sich eine beträchtliche Vertiefung der Abfuhrnuten realisieren, ohne die Seitenteile des Bohrerkopfes mechanisch zu schwächen.

Nach einer weiteren Lehre gemäß Anspruch 12, der eigenständige Bedeutung zukommt, wird ein Gesteinsbohrer mit einem vorschlagsgemäßen Gesteinsbohrerschaft beansprucht, wobei ein Schneideinsatz vorgesehen ist, der in die Aufnahmenut eingesetzt ist. Auf alle Ausführungen zu dem vorschlagsgemäßen Gesteinsbohrerschaft darf verwiesen werden.

Nach einer weiteren Lehre gemäß Anspruch 13, der ebenfalls eigenständige Bedeutung zukommt, wird ein Verfahren zur Herstellung eines vorschlagsgemäßen Gesteinsbohrerschafts beansprucht.

Wesentlich nach dem weiteren Verfahren ist, dass zum Einbringen einer der Abfuhrnuten der Wendelabschnitte die Schleifscheibe mit einem Längsvorschub in Richtung der Bohrerlängsachse verschoben und der Bohrerrohling mit einem Winkelvorschub um die Bohrerlängsachse gedreht werden, wobei die radiale Zustellung der Schleif- oder Frässcheibe beim Einbringen des zweiten Wendelabschnitts größer ist als beim Einbringen des ersten Wendelabschnitts. Durch diese fertigungstechnische Maßnahme lassen sich auf einfache Weise der oben angesprochene erste Wendelabschnitt und der oben angesprochene, zweite Wendelabschnitt herstellen. Auf alle Ausführungen zu dem vorschlagsgemäßen Gesteinsbohrerschaft darf wiederum verwiesen werden.

Im Folgenden wird die Erfindung anhand einer lediglich ein Ausführungsbeispiel darstellenden Zeichnung näher erläutert. In der Zeichnung zeigt:
- Fig. 1: einen vorschlagsgemäßen Gesteinsbohrer bestehend aus einem vorschlagsgemäßen Gesteinsbohrerschaft mit angedeutetem Schneideinsatz in einer Seitenansicht,
- Fig. 2: den Gesteinsbohrer gemäß Fig. 1 in einer perspektivischen Ansicht.

Der dargestellte Gesteinsbohrer lässt sich für eine Vielzahl von Anwendungsbereichen einsetzen. Insoweit darf auf die Ausführungen im einleitenden Teil der Beschreibung verwiesen werden. Die Darstellungen von Konstruktionsdetails in der Zeichnung umfassen Polygonflächen, die auf die jeweilige CAD-Konstruktion zurückgehen. Diese Polygonflächen wurden lediglich zum besseren Verständnis in der Zeichnung beibehalten.

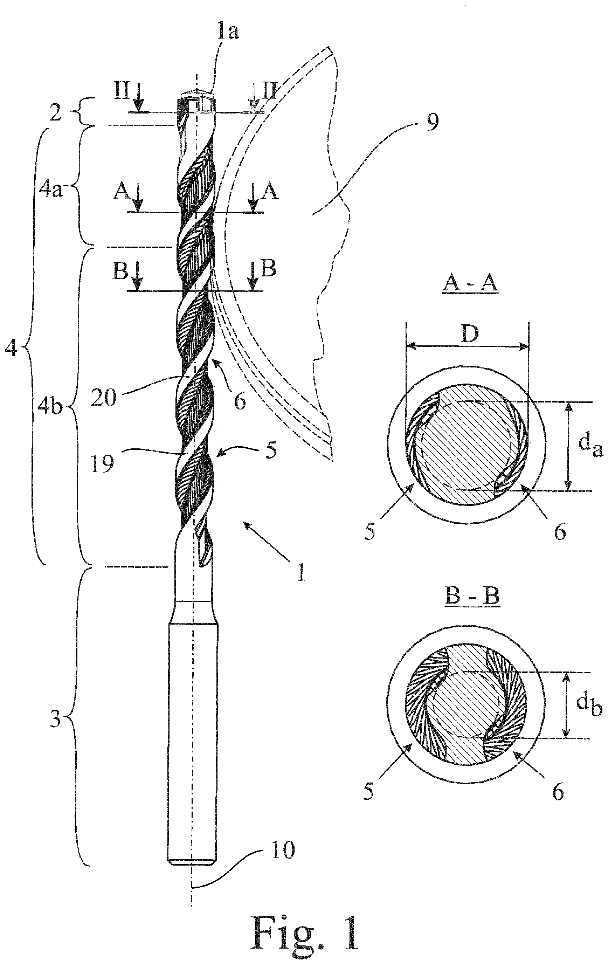

Der in Fig. 1 dargestellte Gesteinsbohrer weist einen Gesteinsbohrerschaft 1 und einen in der Zeichnung in gestrichelter Linie angedeuteten Schneideinsatz 1a auf.

Der Gesteinsbohrerschaft 1 weist am oberen Ende einen Bohrerkopf 2, am unteren Ende einen Einsteckabschnitt 3 und dazwischen eine Wendel 4 auf. Die Wendel 4 ist hier und vorzugsweise zweigängig ausgestaltet, so dass sie entsprechend zwei Abfuhrnuten 5, 6 aufweist. Denkbar ist aber, dass die Wendel 3- oder mehrgängig ausgestaltet ist.

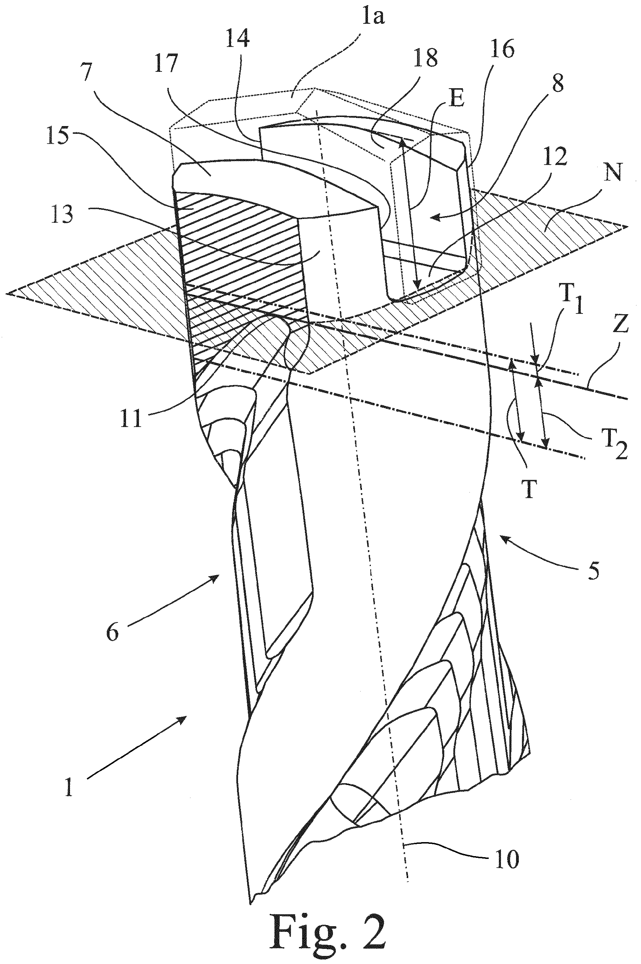

Der Bohrerkopf 2 weist eine Stirnseite 7 auf, die das dem Einsteckabschnitt 3 entgegengesetzte Ende des Gesteinsbohrerschafts 1 bildet. Stirnseitig weist der Bohrerkopf 2 eine Aufnahmenut 8 auf, die der Aufnahme des Schneideinsatzes 1a dient. Dies ist am Besten der Darstellung gemäß Fig. 2 zu entnehmen.

An den Bohrerkopf 2 schließt sich nach unten hin ein erster Wendelabschnitt 4a an, während, weiter zum Einsteckabschnitt hin, ein zweiter Wendelabschnitt 4b vorgesehen ist. Der mittlere Kerndurchmesser d_{b} des zweiten Wendelabschnitts 4b ist kleiner als der mittlere Kerndurchmesser dₐ des ersten Wendelabschnitts 4a. Mit "Kerndurchmesser" ist der innere Durchmesser gemeint, der im Querschnitt gesehen nach dem Einbringen der Abfuhrnuten 5, 6 verbleibt. Ein Vergleich der Schnittansichten A-A und B-B zeigt die dortigen Größenverhältnisse der Kerndurchmesser dₐ und d_{b}.

Die Abfuhrnuten 5, 6 sind bei dem vorschlagsgemäßen Gesteinsbohrerschaft 1 in einem Zerspanprozess mittels zwei gegenüberliegenden Schleif- oder Frässcheiben 9 erzeugt worden. In Fig. 1 ist lediglich eine der beiden Frässcheiben 9 dargestellt. Grundsätzlich ist auch denkbar, dass nur eine einzige Frässcheibe 9 vorgesehen ist, die die beiden Abfuhrnuten 5, 6 sequentiell erzeugt. Die Schleif- oder Frässcheibe 9 ist gegenüber der Bohrerlängsachse 10 um einen nicht dargestellten Anstellwinkel angestellt, der im Wesentlichen der Spiralsteigung der jeweiligen Abfuhrnut 5, 6 entspricht.

Wesentlich ist nun, dass sich die axiale Lage Z des bohrkopfseitigen Zerspanauslaufs 11 dieses, auf die Erzeugung der Abfuhrnuten 5, 6 gerichteten Zerspanprozesses innerhalb eines Toleranzfensters T um die axiale Lage N des Nutgrundes 12 von weniger als T₁=10% des Bohrerdurchmessers D nach oben hin und von weniger als T₂=20 % des Bohrerdurchmessers D nach unten hin befindet.

Mit der axialen Lage Z des Zerspanauslaufs 11 ist die Lage des axial höchstliegenden Zerspanbereichs gemeint. Bei dem dargestellten und insoweit bevorzugten Ausführungsbeispiel entspricht die axiale Lage Z des Zerspanauslaufs 11 exakt der axialen Lage des Nutgrundes 12. Die Lage Z befindet sich hier im oberen Teil der Toleranzfenster T. Grundsätzlich kann es auch vorgesehen sein, dass sich die Lage Z exakt in der Mitte des Toleranzfensters T befindet.

Die vorschlagsgemäße Ausgestaltung hat den Vorteil, dass die mechanische Stabilität des Bohrerkopfes 2 im Hinblick auf die Abstützung des Schneideinsatzes 1a besonders hoch ist. Der Bohrerkopf 2 besteht im axialen Erstreckungsbereich E der Aufnahmenut 8 aus zwei Seitenteilen 13, 14 mit jeweils einem Seitenteilvolumen, welche Seitenteile 13, 14 die Aufnahmenut 8 definieren. Durch die vorschlagsgemäße axiale Begrenzung der Erstreckung des Zerspanauslaufes 11 lässt sich wirksam vermeiden, dass der Zerspanauslauf 11 allzu weit in die Seitenteilvolumen hineinläuft. Gleichzeitig ist gewährleistet, dass die Abfuhrnuten 5, 6 möglichst weit an den Schneideinsatz 1a heranreichen, um einen optimalen Bohrmehltransport zu gewährleisten.

Für die Aufnahmenut 8 sind verschiedene konstruktive Varianten denkbar. Hier und vorzugsweise ist die Aufnahmenut 8 als gerade Aufnahmenut ausgestaltet, die quer über die Stirnseite 7 des Gesteinsbohrerschafts 1 verläuft. Alternativ kann die Aufnahmenut 8 als sternförmige Aufnahmenut 8 ausgestaltet sein, deren Sternpunkt auf die Bohrerlängsachse 10 ausgerichtet ist.

Die "axiale Lage des Nutgrundes" ist vorliegend als der tiefste axiale Punkt des Nutgrundes 12 der Aufnahmenut 8 definiert.

Bei dem dargestellten und insoweit bevorzugten Ausführungsbeispiel weisen die Seitenteile 13, 14 jeweils einen im Wesentlichen radial nach außen gerichteten Bohrerwandabschnitt 15, 16 auf. Ferner weisen die Seitenteile 13, 14 jeweils einen im Wesentlichen radial nach innen gerichteten Nutwandabschnitt 17, 18 auf, wobei die Nutwandabschnitte vorzugsweise formschlüssig mit dem Schneideinsatz 1a in Eingriff stehen. Die Bohrerwandabschnitte 15, 16 und/oder die Nutwandabschnitte 17, 18 verlaufen vorzugsweise jeweils im Längsschnitt gesehen, also in einem durch die Bohrerlängsachse 10 verlaufenden Schnitt gesehen, über zumindest einen Teil des axialen Erstreckungsbereichs der Aufnahmenut 8, vorzugsweise über den gesamten axialen Erstreckungsbereich der Aufnahmenut 8, parallel zu der Bohrerlängsachse 10. Die Bohrerwandabschnitte 15, 16 schließen sich hier und vorzugsweise unmittelbar an den Zerspanauslauf 11 an, wie am besten in Fig. 2 zu erkennen ist.

Grundsätzlich kann der zweite Wendelabschnitt 4b an irgendeiner Stelle der Wendel 4 vorgesehen sein. Hier und vorzugsweise ist es allerdings so, dass sich der zweite Wendelabschnitt 4b unmittelbar an den ersten Wendelabschnitt 4a anschließt. Weiter vorzugsweise besteht die Wendel 4 ausschließlich aus den beiden Wendelabschnitten 4a, 4b.

Weiter vorzugsweise ist es bei dem dargestellten und insoweit bevorzugten Ausführungsbeispiel so, dass der zweite Wendelabschnitt 4b über die axiale Erstreckung des Gesteinsbohrerschafts 1 einen konstanten Kerndurchmesser d_{b} aufweist.

Der erste Wendelabschnitt 4a dagegen weist einen sich in Richtung der Stirnseite 7 vergrößernden Kerndurchmesser dₐ auf. Alternativ oder zusätzlich kann es grundsätzlich vorgesehen sein, dass auch der zweite Wendelabschnitt 4b über die axiale Erstreckung des Gesteinsbohrerschafts 1 zumindest abschnittsweise einen sich verändernden Kerndurchmesser 4b aufweist.

Es hat sich in Versuchen gezeigt, dass sich eine gute Steigerung des Bohrmehltransports realisieren lässt, wenn sich der erste Wendelabschnitt 4a über weniger als 50 % der axialen Länge der Wendel 4 erstreckt. Eine weitere Optimierung ließ sich in Versuchen dadurch erreichen, dass sich der erste Wendelabschnitt 4a über weniger als 30 % der axialen Länge der Wendel 4 erstreckt. Die größte Steigerung des Bohrmehltransports ließ sich in Versuchen dadurch erreichen, dass sich der erste Wendelabschnitt 4a über etwa 20 % der axialen Länge der Wendel 4 erstreckt.

Die Kerndurchmesser dₐ und d_{b} des ersten Wendelabschnitts 4a und des zweiten Wendelabschnitts 4b lassen sich je nach Anwendungsfall in einem weiten Bereich einstellen. Hier und vorzugsweise ist der mittlere Kerndurchmesser dₐ des ersten Wendelabschnitts 4a um mindestens 5 %, hier und vorzugsweise um mindestens 10 %, größer als der mittlere Kerndurchmesser d_{b} des zweiten Wendelabschnitts.

Die vorschlagsgemäße Lösung lässt sich auf eine Vielzahl von Wendelgeometrien anwenden. Denkbar ist beispielsweise, dass der erste Wendelabschnitt 4a und der zweite Wendelabschnitt 4b eine sich über die axiale Erstreckung des Gesteinsbohrerschafts 1 verändernde Wendelsteigung aufweist. Es hat sich als ganz besonders vorteilhaft gezeigt, wenn eine der beiden Abfuhrnuten 5, 6 eine konstante Wendelsteigung aufweist, wobei die Anordnung weiter vorzugsweise so getroffen ist, dass zumindest einer der beiden dieser Abfuhrnut 5, 6 zugeordneten Wendelstege 19, 20 entlang der Bohrerlängsachse 10 zumindest abschnittsweise eine sich insbesondere alternierend verändernde Stegrückenbreite aufweist bzw. aufweisen. In diesem Zusammenhang darf auf die deutsche Patentanmeldung DE 10 2011 016 686 A1 verwiesen werden, die auf die Anmelderin zurückgeht und deren Inhalt insoweit zum Gegenstand der vorliegenden Anmeldung gemacht wird.

Grundsätzlich kann der Bohrerdurchmesser D über die axiale Erstreckung der Wendel 4 veränderlich vorgesehen sein. Hier und vorzugsweise ist der Bohrerdurchmesser D aber über die gesamte Erstreckung der Wendel 4 konstant.

Der Gesteinsbohrerschaft 1 ist bei dem dargestellten und insoweit bevorzugten Ausführungsbeispiel einstückig ausgestaltet und besteht vorzugsweise aus ungehärtetem Stahl. Bei dem Schneideinsatz 1a handelt es sich um einen Hartmetalleinsatz o. dgl..

Nach einer weiteren Lehre, der ebenfalls eigenständige Bedeutung zukommt, wird der Gesteinsbohrer bestehend aus Gesteinsbohrerschaft 1 und Schneideinsatz 1a, der in die Aufnahmenut 8 eingesetzt ist, als solcher beansprucht. Auf alle Ausführungen zu dem vorschlagsgemäßen Gesteinsbohrerschaft darf verwiesen werden.

Vorzugsweise ist der in die Aufnahmenut 8 eingesetzte Schneideinsatz 1a in einer Seitenansicht im Wesentlichen dachförmig ausgestaltet, wobei der Schneideinsatz 1a auf beiden Seiten seiner dachförmigen Ausbildung jeweils eine Schneidkante aufweist, die durch eine vorlaufend angeordnete Spanfläche und einer nachlaufend angeordnete Freifläche gebildet ist. Andere konstruktive Ausgestaltungen des Schneideinsatzes 1a sind denkbar.

Es darf noch darauf hingewiesen werden, dass verschiedene vorteilhafte Varianten für den Übergang von unten nach oben vom zweiten Wendelabschnitt 4b auf den ersten Wendelabschnitt 4a möglich sind.

In einer ersten, besonders bevorzugten Variante weist der zweite Wendelabschnitt 4b über die axiale Erstreckung des Gesteinsbohrerschafts 1 einen konstanten Kerndurchmesser d_{b} auf. Der an den zweiten Wendelabschnitt 4b angrenzende Teil des ersten Wendelabschnitts 4a zeigt dann zum Bohrerkopf 2 hin eine Steigung des Kerndurchmessers dₐ, der, vorzugsweise, zum Bohrerkopf 2 hin in einen weiteren Teil des ersten Wendelabschnitts 4a mit konstantem Kerndurchmesser dₐ übergeht.

In einer zweiten, weiter bevorzugten Variante weisen beide Wendelabschnitte 4a, 4b jeweils einen konstanten Kerndurchmesser dₐ, d_{b} auf, so dass der Übergang zwischen den beiden Wendelabschnitten 4a, 4b einen Sprung im Kerndurchmesser aufweist.

In einer dritten, ebenfalls denkbaren Variante steigt der Kerndurchmesser über die gesamte Wendel 4 mehr oder weniger kontinuierlich an, wobei der Übergangspunkt zwischen den beiden Wendelabschnitten 4a, 4b nicht eindeutig bestimmbar ist. Das ist tolerierbar, da es für die vorschlagsgemäße Lösung lediglich darauf ankommt, das zwei Wendelabschnitte 4a, 4b bestimmbar sind, deren mittlerer Kerndurchmesser unterschiedlich ist.

Nach einer weiteren Lehre, der ebenfalls eigenständige Bedeutung zukommt, wird ein Verfahren zur Herstellung eines vorschlagsgemäßen Gesteinsbohrerschafts 1 beansprucht.

Bei dem vorschlagsgemäßen Verfahren kommt mindestens eine Schleif- oder Frässcheibe 9 mit einer Umfangsfläche und zwei Seitenflächen zum Einsatz. Hier und vorzugsweise ist eine einzige Schleif- oder Frässcheibe 9 vorgesehen, die beide Abfuhrnuten 5, 6 hintereinander in den Bohrerrohling einbringt. Denkbar ist auch, dass zwei Schleif- oder Frässcheiben vorgesehen sind, die jeweils einer Abfuhrnut 5, 6 zugeordnet sind, und die gleichzeitig, gegenüberliegend in Bearbeitungseingriff mit dem Bohrerrohling kommen. Der Bohrerrohling ist vor dem Einbringen der Abfuhrnuten 5, 6, zumindest im Bereich der zu erzeugenden Wendel 4, zylindrisch ausgestaltet.

Zum Einbringen einer Abfuhrnut 5, 6 wird die Schleif- oder Frässcheibe 9 mit einem Längsvorschub in Richtung der Bohrerlängsachse verschoben, während der Bohrerrohling mit einem Winkelvorschub um die Bohrerlängsachse gedreht wird. Wesentlich dabei ist die Tatsache, dass zur Erzeugung des ersten Wendelabschnitts 4a und des zweiten Wendelabschnitts 4b die radiale Zustellung der Schleif- oder Frässcheibe 9 beim Einbringen des zweiten Wendelabschnitts 4b größer ist als beim Einbringen des ersten Wendelabschnitts 4a.

Vorzugsweise ist es vorgesehen, dass beim Einbringen des ersten Wendelabschnitts 4a die radiale Zustellung der Schleif- oder Frässcheibe 9 kontinuierlich verändert, insbesondere zur Stirnseite 7 hin kontinuierlich reduziert wird, so dass der Kerndurchmesser dₐ entsprechend kontinuierlich ansteigt.

In besonders bevorzugter Ausgestaltung werden die Abfuhrnuten 5, 6 vom Einsteckabschnitt ausgehend in den Bohrerrohling eingebracht. Entsprechend wird zunächst der zweite Wendelabschnitt 4b und anschließend der erste Wendelabschnitt 4a in den Bohrerrohling eingebracht. Weiter vorzugsweise ist es so, dass nach dem Einbringen des ersten Wendelabschnitts 4a der Winkelvorschub des Bohrerrohlings gestoppt wird, so dass die Schleif- oder Frässcheibe 9 entlang des Bohrerkopfes 2 läuft und einen oben angesprochenen Bohrerwandabschnitt 15,16 mit axial geradem Verlauf in den Bohrerrohling einbringt

Hier und vorzugsweise werden alle Wendelabschnitte 4a, 4b mit ein und derselben Schleif- oder Frässcheibe 9 geschliffen bzw. gefräst. Grundsätzlich ist es aber auch denkbar, dass ein Wendelabschnitt 4a, 4b mit einer anderen Schleif- oder Frässcheibe 9 als der übrige Wendelabschnitt 4a, 4b oder die übrigen Wendelabschnitte 4a, 4b geschliffen bzw. gerfräst wird.

Entsprechend ist es vorzugsweise so, dass alle Wendelabschnitte 4a, 4b einer Wendel 4 jeweils in einem einzigen, kontinuierlichen Schleifvorgang geschliffen bzw. gefräst werden, ohne dass es zu einem Werkzeugwechsel kommt.

Es darf schließlich noch darauf hingewiesen werden, dass die Angaben "axial" und "radial" stets auf die Bohrerlängsachse 10 bezogen sind.

## Patentansprüche

1. Gesteinsbohrerschaft, der am oberen Ende einen Bohrerkopf (2), am unteren Ende einen Einsteckabschnitt (3) und dazwischen eine Wendel (4) aufweist, wobei die Wendel (4) mindestens zweigängig ist und entsprechend mindestens zwei Abfuhrnuten (5,6) aufweist und wobei der Bohrerkopf (2) eine stirnseitige Aufnahmenut (8) für die Aufnahme eines Schneideinsatzes (1a) aufweist, **dadurch gekennzeichnet, dass** ein sich an den Bohrerkopf (2) anschließender, erster Wendelabschnitt (4a) und, weiter zum Einsteckabschnitt (3) hin, ein zweiter Wendelabschnitt (4b) vorgesehen sind, dass der mittlere Kerndurchmesser (db) des zweiten Wendelabschnitts (4b) kleiner ist als der mittlere Kerndurchmesser (da) des ersten Wendelabschnitts (4a), dass die Abfuhrnuten (5,6) in einem Zerspanprozess mittels mindestens einer Schleif- oder Frässcheibe (9) erzeugt worden sind, und dass sich die axiale Lage Z des bohrkopfseitigen Zerspanauslaufs (11) dieses Zerspanprozesses innerhalb eines Toleranzfensters T um die axiale Lage N des Nutgrundes (12) der Aufnahmenut (8) von weniger als T1=10% des Bohrerdurchmessers D nach oben hin und von weniger als T2=20 % nach unten hin befindet.

2. Gesteinsbohrerschaft nach Anspruch 1, **dadurch gekennzeichnet, dass** die Aufnahmenut (8) als gerade Aufnahmenut (8) ausgestaltet ist, die quer über die Stirnseite (7) des Gesteinsbohrerschafts (1) verläuft, oder, dass die Aufnahmenut (8) als sternförmige Aufnahmenut (8) ausgestaltet ist, deren Sternpunkt auf die Bohrerlängsachse (10) ausgerichtet ist.

3. Gesteinsbohrerschaft nach einem der vorhergehenden Ansprüche, **dadurch gekennzeichnet, dass** der Bohrerkopf (2) mindestens zwei Seitenteile (13,14) aufweist und dass die Seitenteile (13,14) jeweils einen im Wesentlichen radial nach außen gerichteten Bohrerwandabschnitt (15,16) aufweisen, und/oder, dass die Seitenteile (13,14) jeweils einen im Wesentlichen radial nach innen gerichteten Nutwandabschnitt (17,18) aufweisen.

4. Gesteinsbohrerschaft nach Anspruch 3, **dadurch gekennzeichnet, dass** die Bohrerwandabschnitte (15, 16) und/oder die Nutwandabschnitte (17, 18) jeweils im Längsschnitt gesehen über zumindest einen Teil des axialen Erstreckungsbereichs der Aufnahmenut (8) parallel zu der Bohrerlängsachse (10) verlaufen.

5. Gesteinsbohrerschaft nach einem der vorhergehenden Ansprüche, **dadurch gekennzeichnet, dass** sich der zweite Wendelabschnitt (4b) unmittelbar an den ersten Wendelabschnitt (4a) anschließt, vorzugsweise, dass die Wendel (4) ausschließlich aus den beiden Wendelabschnitten (4a, 4b) besteht.

6. Gesteinsbohrerschaft nach einem der vorhergehenden Ansprüche, **dadurch gekennzeichnet, dass** der zweite Wendelabschnitt (4b) über die axiale Erstreckung des Gesteinsbohrerschafts (1) einen konstanten Kerndurchmesser (db) aufweist.

7. Gesteinsbohrerschaft nach einem der vorhergehenden Ansprüche, **dadurch gekennzeichnet, dass** der erste Wendelabschnitt (4a) und/oder der zweite Wendelabschnitt (4b) über die axiale Erstreckung des Gesteinsbohrerschafts (1) zumindest abschnittsweise einen sich verändernden Kerndurchmesser (da, db) aufweist bzw. aufweisen.

8. Gesteinsbohrerschaft nach einem der vorhergehenden Ansprüche, **dadurch gekennzeichnet, dass** sich der erste Wendelabschnitt (4a) über weniger als 50% der axialen Länge der Wendel (4) erstreckt, vorzugsweise, dass sich der erste Wendelabschnitt (4a) über weniger als 30% der axialen Länge der Wendel (4) erstreckt, weiter vorzugsweise, das sich der erste Wendelabschnitt (4a) über etwa 20% der axialen Länge der Wendel (4) erstreckt.

9. Gesteinsbohrerschaft nach einem der vorhergehenden Ansprüche, **dadurch gekennzeichnet, dass** der mittlere Kerndurchmesser (da) des ersten Wendelabschnitts (4a) um mindestens 5%, vorzugsweise um mindestens 10%, über dem mittleren Kerndurchmesser (db) des zweiten Wendelabschnitts (4b) liegt.

10. Gesteinsbohrerschaft nach einem der vorhergehenden Ansprüche, **dadurch gekennzeichnet, dass** der erste Wendelabschnitt (4a) und/oder der zweite Wendelabschnitt (4b) eine sich über die axiale Erstreckung des Gesteinsbohrerschafts (1) verändernde Wendelsteigung aufweist.

11. Gesteinsbohrerschaft nach einem der vorhergehenden Ansprüche, **dadurch gekennzeichnet, dass** der Gesteinsbohrerschaft (1) einstückig ausgestaltet ist.

12. Gesteinsbohrer mit einem Gesteinsbohrerschaft (1) nach einem der vorhergehenden Ansprüche und einem Schneideinsatz (1a), der in die Aufnahmenut (8) eingesetzt ist, vorzugsweise, dass der Schneideinsatz (1a) in einer Seitenansicht im Wesentlichen dachförmig ausgestaltet ist, dass der Schneideinsatz (1a) auf beiden Seiten seiner dachförmigen Ausbildung jeweils eine Schneidkante aufweist, die durch eine vorlaufend angeordnete Spanfläche und eine nachlaufend angeordnete Freifläche gebildet ist.

13. Verfahren zur Herstellung eines Gesteinsbohrerschafts (1) nach einem der Ansprüche 1 bis 11, wobei mindestens eine Schleif- oder Frässcheibe (9) mit einer Umfangsfläche und zwei Seitenflächen vorgesehen ist, wobei zum Einbringen einer der Abfuhrnuten (5, 6) der Wendelabschnitte (4a,4b) die Schleif- oder Frässcheibe (9) mit einem Längsvorschub in Richtung der Bohrerlängsachse (10) verschoben und der Bohrerrohling mit einem Winkelvorschub um die Bohrerachse (10) gedreht werden, wobei die radiale Zustellung der Schleif- oder Frässcheibe (9) beim Einbringen des zweiten Wendelabschnitts (4b) größer ist als beim Einbringen des ersten Wendelabschnitts (4a).

14. Verfahren nach Anspruch 13, **dadurch gekennzeichnet, dass** die Abfuhrnuten (5,6) vom Einsteckabschnitt (3) ausgehend in den Bohrerrohling eingebracht werden und dass nach dem Einbringen des ersten Wendelabschnitts (4a) der Winkelvorschub gestoppt wird, so dass die Schleif- oder Frässcheibe (9) entlang des Bohrerkopfes (2) läuft und einen Bohrerwandabschnitt (15,16) mit axial geradem Verlauf einbringt.

## Claims

1. Rock drill shaft which has at the upper end a drill head (2), at the lower end an insertion portion (3) and therebetween a flute (4), wherein the flute (4) has at least two threads and accordingly at least two discharge grooves (5,6 ), and wherein the drill head (2) has an end receiving groove (8) for receiving a cutting insert (1a), **characterized in that**
a first flute portion (4) which adjoins the drill head (2) and, further in the direction towards the insertion portion (3), a second flute portion (4b) are provided, **in that** the mean core diameter (db) of the second flute portion (4b) is smaller than the mean core diameter (da) of the first flute portion (4a), **in that** the discharge grooves (5, 6) have been produced in a cutting process by means of at least one grinding or milling disc (9), and **in that** the axial position Z of the cutting outlet (11) on the drill head of this cutting process is located within a tolerance range T about the axial position N of the groove base (12) of the receiving groove (8) less than T1=10% of the drill diameter D in an upward direction and less than T2=20% in a downward direction.

2. Rock drill shaft according to Claim 1, **characterized in that** the receiving groove (8) is in the form of a linear receiving groove (8) which extends transversely over the end face (7) of the rock drill shaft (1), or **in that** the receiving groove (8) is in the form of a star-like receiving groove (8), the star point of which is orientated towards the longitudinal drill axis (10).

3. Rock drill shaft according to either of the preceding claims, **characterized in that** the drill head (2) has at least two side portions (13, 14) and **in that** the side portions (13,14) in each case have a substantially radially outwardly directed drill wall portion (15, 16), and/or **in that** the side portions (13, 14) in each case have a substantially radially inwardly directed groove wall portion (17, 18).

4. Rock drill shaft according to Claim 3, **characterized in that** the drill wall portions (15, 16) and/or the groove wall portions (17, 18) in each case when viewed in longitudinal section extend over at least a portion of the axial extent range of the receiving groove (8) parallel with the longitudinal drill axis (10).

5. Rock drill shaft according to any one of the preceding claims, **characterized in that** the second flute portion (4b) directly adjoins the first flute portion (4a), preferably **in that** the flute (4) exclusively comprises the two flute portions (4a, 4b).

6. Rock drill shaft according to any one of the preceding claims, **characterized in that** the second flute portion (4b) has over the axial extent of the rock drill shaft (1) a constant core diameter (db).

7. Rock drill shaft according to any one of the preceding claims, **characterized in that** the first flute portion (4a) and/or the second flute portion (4b) has/have over the axial extent of the rock drill shaft (1) at least partially a changing core diameter (da, db).

8. Rock drill shaft according to any one of the preceding claims, **characterized in that** the first flute portion (4a) extends over less than 50% of the axial length of the flute (4), preferably **in that** the first flute portion (4a) extends over less than 30% of the axial length of the flute (4), more preferably **in that** the first flute portion (4a) extends over approximately 20% of the axial length of the flute (4).

9. Rock drill shaft according to any one of the preceding claims, **characterized in that** the mean core diameter (da) of the first flute portion (4a) is at least 5%, preferably at least 10% above the mean core diameter (db) of the second flute portion (4b).

10. Rock drill shaft according to any one of the preceding claims, **characterized in that** the first flute portion (4a) and/or the second flute portion (4b) has/have a flute pitch which changes over the axial extent of the drill bore shaft (1).

11. Rock drill shaft according to any one of the preceding claims, **characterized in that** the rock drill shaft (1) is configured in an integral manner.

12. Rock drill having a rock drill shaft (1) according to any one of the preceding claims and a cutting insert (1a) which is inserted into the receiving groove (8), preferably in that the cutting insert (1a) is configured as a side view to be substantially roof-like, in that the cutting insert (1a) at both sides of the roof-like configuration thereof in each case has a cutting edge which is formed by means of a cutting face which is arranged in a leading manner and a free face which is arranged in a following manner.

13. Method for producing a rock drill shaft (1) according to any one of Claims 1 to 11, wherein at least one grinding or milling disc (9) with a circumferential face and two side faces is provided, wherein, in order to introduce one of the discharge grooves (5, 6) of the flute portions (4a, 4b), the grinding or milling disc (9) is displaced with a longitudinal advance in the direction of the longitudinal drill axis (10) and the drill blank is rotated with an angular advance about the drill axis (10), wherein the radial positioning of the grinding or milling disc (9) when the second flute portion (4b) is introduced is greater than when the first flute portion (4a) is introduced.

14. Method according to Claim 13, **characterized in that** the discharge grooves (5, 6) are introduced into the drill blank starting from the insertion portion (3) and **in that**, after the first flute portion (4a) has been introduced, the angular advance is stopped so that the grinding or milling disc (9) runs along the drill head (2) and introduces a drill wall portion (15,16) with an axially linear path.

## Revendications

1. Tige de foret à roche, qui présente à l'extrémité supérieure une tête de foret (2), à l'extrémité inférieure une section d'insertion (3) et entre celles-ci une hélice (4), l'hélice (4) étant au moins à deux filets et présentant en conséquence au moins deux rainures d'évacuation (5, 6) et la tête de foret (2) présentant une rainure de réception frontale (8) pour la réception d'un insert de coupe (1a),
**caractérisée en ce**
**qu'**il est prévu une première section d'hélice (4a) se raccordant à la tête de foret (2) et, plus loin vers la section d'insertion (3), une deuxième section d'hélice (4b), **en ce que** le diamètre de noyau moyen (db) de la deuxième section d'hélice (4b) est plus petit que le diamètre de noyau moyen (da) de la première section d'hélice (4a), **en ce que** les rainures d'évacuation (5, 6) ont été produites dans un processus d'enlèvement de copeaux au moyen d'au moins un disque de meulage ou de fraisage (9), et **en ce que** la position axiale Z de la sortie d'enlèvement de copeaux (11) côté tête de forage de ce processus d'enlèvement de copeaux se trouve à l'intérieur d'une fenêtre de tolérance T autour de la position axiale N du fond de rainure (12) de la rainure de réception (8) de moins de T1 = 10 % du diamètre de foret D vers le haut et de moins de T2 = 20 % vers le bas.

2. Tige de foret à roche selon la revendication 1, **caractérisée en ce que** la rainure de réception (8) est conçue sous forme de rainure de réception droite (8) qui s'étend transversalement sur le côté frontal (7) de la tige de foret à roche (1), ou **en ce que** la rainure de réception (8) est conçue sous forme de rainure de réception en forme d'étoile (8) dont le point d'étoile est orienté sur l'axe longitudinal de foret (10).

3. Tige de foret à roche selon l'une quelconque des revendications précédentes, **caractérisée en ce que** la tête de foret (2) présente au moins deux parties latérales (13, 14) et **en ce que** les parties latérales (13, 14) présentent chacune une section de paroi de foret (15, 16) orientée essentiellement radialement vers l'extérieur, et/ou **en ce que** les parties latérales (13, 14) présentent chacune une section de paroi de rainure (17, 18) orientée essentiellement radialement vers l'intérieur.

4. Tige de foret à roche selon la revendication 3, **caractérisée en ce que** les sections de paroi de foret (15, 16) et/ou les sections de paroi de rainure (17, 18) s'étendent respectivement, vues en coupe longitudinale, sur au moins une partie de la zone d'étendue axiale de la rainure de réception (8) parallèlement à l'axe longitudinal de foret (10).

5. Tige de foret à roche selon l'une quelconque des revendications précédentes, **caractérisée en ce que** la deuxième section d'hélice (4b) se raccorde directement à la première section d'hélice (4a), de préférence **en ce que** l'hélice (4) se compose exclusivement des deux sections d'hélice (4a, 4b).

6. Tige de foret à roche selon l'une quelconque des revendications précédentes, **caractérisée en ce que** la deuxième section d'hélice (4b) présente un diamètre de noyau (db) constant sur l'étendue axiale de la tige de foret à roche (1).

7. Tige de foret à roche selon l'une quelconque des revendications précédentes, **caractérisée en ce que** la première section d'hélice (4a) et/ou la deuxième section d'hélice (4b) présentent au moins par sections un diamètre de noyau (da, db) variable sur l'étendue axiale de la tige de foret à roche (1).

8. Tige de foret à roche selon l'une quelconque des revendications précédentes, **caractérisée en ce que** la première section d'hélice (4a) s'étend sur moins de 50 % de la longueur axiale de l'hélice (4), de préférence **en ce que** la première section d'hélice (4a) s'étend sur moins de 30 % de la longueur axiale de l'hélice (4), de préférence encore **en ce que** la première section d'hélice (4a) s'étend sur environ 20 % de la longueur axiale de l'hélice (4).

9. Tige de foret à roche selon l'une quelconque des revendications précédentes, **caractérisée en ce que** le diamètre de noyau moyen (da) de la première section d'hélice (4a) est supérieur d'au moins 5 %, de préférence d'au moins 10 %, au diamètre de noyau moyen (db) de la deuxième section d'hélice (4b).

10. Tige de foret à roche selon l'une quelconque des revendications précédentes, **caractérisée en ce que** la première section d'hélice (4a) et/ou la deuxième section d'hélice (4b) présentent un pas d'hélice qui varie sur l'étendue axiale de la tige de foret à roche (1).

11. Tige de foret à roche selon l'une quelconque des revendications précédentes, **caractérisée en ce que** la tige de foret à roche (1) est conçue en une seule pièce.

12. Foret à roche avec une tige de foret à roche (1) selon l'une quelconque des revendications précédentes et un insert de coupe (la) qui est inséré dans la rainure de réception (8), de préférence en ce que l'insert de coupe (1a) est conçu, en vue latérale, essentiellement en forme de toit, en ce que l'insert de coupe (1a) présente, des deux côtés de sa configuration en forme de toit, respectivement une arête de coupe qui est formée par une surface de coupe agencée en amont et une surface de dépouille agencée en aval.

13. Procédé de fabrication d'une tige de foret à roche (1) selon l'une quelconque des revendications 1 à 11, dans lequel il est prévu au moins un disque de meulage ou de fraisage (9) avec une surface périphérique et deux surfaces latérales ; pour réaliser l'une des rainures d'évacuation (5, 6) des sections d'hélice (4a, 4b), le disque de meulage ou de fraisage (9) étant déplacé avec une avance longitudinale dans la direction de l'axe longitudinal de foret (10) et l'ébauche de foret étant tournée autour de l'axe de foret (10) avec une avance angulaire, l'approche radiale du disque de meulage ou de fraisage (9) étant plus grande lors de la réalisation de la deuxième section d'hélice (4b) que lors de la réalisation de la première section d'hélice (4a).

14. Procédé selon la revendication 13, **caractérisé en ce que** les rainures d'évacuation (5, 6) sont réalisées dans l'ébauche de foret en partant de la section d'insertion (3) et **en ce qu'**après la réalisation de la première section d'hélice (4a), l'avance angulaire est arrêtée de telle sorte que le disque de meulage ou de fraisage (9) se déplace le long de la tête de foret (2) et réalise une section de paroi de foret (15, 16) avec un tracé rectiligne axial.
